# EUROPEAN PATENT APPLICATION

(11) **EP 4 834 857 A1**
(43) Date of publication of application: **04.11.2026**
(21) Application number: 25760917.2
(22) Date of filing: 26.02.2025
(51) Int. Cl.: C03C 3/091

(54) **GLASS AND PREPARATION METHOD THEREFOR, GLASS ASSEMBLY, AND VEHICLE**

(30) Priority: 27.02.2024 CN 202410211910
(71) Applicant: Fuyao Glass Industry Group Co., Ltd., Fuqing, Fujian 350300 (CN)
(72) Inventor: WANG, Zhe, Fuzhou, Fujian 350300 (CN); TANG, Ziqing, Fuzhou, Fujian 350300 (CN); WANG, Li, Fuzhou, Fujian 350300 (CN)
(74) Representative: Mewburn Ellis LLP
(86) International application number: PCT/CN2025/079155
(87) International publication number: WO 2025/180377

(57) **Abstract**

A glass and a manufacturing method thereof, a glass assembly, and a vehicle are provided in the disclosure. The glass satisfies the following conditions:$\left({CS}_{0}+{CS}_{1}\right) ∗ {DOL}_{1} + \left({CS}_{1}+{CS}_{2}\right) ∗ \left({DOL}_{2}-{DOL}_{1}\right) + {CS}_{2} \left({DOL}_{3}-{DOL}_{2}\right) \leq 24 ∗ t , {CS}_{0} \geq 600 MPa ,$ and DOL₁+DOL₂+DOL₃ ≥ 0.25*t*. CS₀ represents a surface compressive stress of the glass, CS₁ represents a knee stress of the glass between a first ion-exchange process and a second ion-exchange process, DOL₁ represents a knee depth of the glass between the first ion-exchange process and the second ion-exchange process, CS₂ represents a knee stress of the glass between a thermal strengthening process and the first ion-exchange process, DOL₂ represents a knee depth of the glass between the thermal strengthening process and the first ion-exchange process, DOL₃ represents a stress depth of the glass by the thermal strengthening process, and *t* represents a thickness of the glass. Consequently, the fragmentation resistance of the glass is improved.

## Description

This application claims priority to Chinese Patent Application No. 202410211910.8, filed February 27, 2024, and entitled "GLASS AND MANUFACTURING METHOD THEREOF, GLASS ASSEMBLY, AND VEHICLE", the entire disclosure of which is incorporated herein by reference.

### TECHNICAL FIELD

The present disclosure relates to the field of glass technology, in particular, to a glass and a manufacturing method thereof, a glass assembly, and a vehicle.

### BACKGROUND

In the field of glass technology, chemically strengthened thin glass possesses a general chemically strengthened level of bending fracture resistance and a relatively small thickness. However, when a surface of the chemically strengthened thin glass is impacted by a hard sharp object, crack propagation is prone to occur, resulting in a low surface needle-drop performance of the chemically strengthened laminated glass.

### SUMMARY

In view of this, a first aspect of the disclosure provides a glass. The glass has a first region, a second region, and a third region. The second region is located within the first region, and the third region is located within the second region. The first region, the second region, and the third region each extend from an outer surface of the glass toward a center of the glass. The glass satisfies the following conditions:$\left({CS}_{0}+{CS}_{1}\right) ∗ {DOL}_{1} + \left({CS}_{1}+{CS}_{2}\right) ∗ \left({DOL}_{2}-{DOL}_{1}\right) + {CS}_{2} \left({DOL}_{3}-{DOL}_{2}\right) \leq 24 ∗ t , {CS}_{0} \geq 600 MPa ,$ and DOL₁+DOL₂+DOL₃ ≥ 0.25*t*. CS₀ represents a surface compressive stress of the glass, CS₁ represents a knee stress of the glass between a first ion-exchange process and a second ion-exchange process, DOL₁ represents a knee depth of the glass between the first ion-exchange process and the second ion-exchange process, CS₂ represents a knee stress of the glass between a thermal strengthening process and the first ion-exchange process, DOL₂ represents a knee depth of the glass between the thermal strengthening process and the first ion-exchange process, DOL₃ represents a stress depth of the glass by the thermal strengthening process, and *t* represents a thickness of the glass.

In the glass provided in the first aspect of the disclosure, the relationships among CS₀, CS₁, DOL₁, CS₂, DOL₂, DOL₃, and *t* are defined through the above formulas, such that the first region, the second region, and the third region of the glass cooperate with each other to improve the fragmentation resistance of the glass. Therefore, after the glass is subjected to an impact, cracks are prevented from propagating and reaching the center of the glass.

In the related art, when the glass is subjected to common heavy scratches, sharp-object pressing, or impact, the impact or impact cracks pass through the outer surface of the glass and reach the center of the glass, causing the glass to fracture. However, in the disclosure, when the glass is subjected to common heavy scratches, sharp-object pressing, or impact, the impact or impact cracks need to pass through the third region, the portion of the second region excluding the third region, and the portion of the first region excluding the second region, before reaching the center of the glass. In other words, when the glass is subjected to common heavy scratches, sharp-object pressing, or impact, the impact or impact cracks need to pass through the third region, the second region, and the first region before reaching the center of the glass.

Specifically, by defining the relationships among CS₀, CS₁, DOL₁, CS₂, DOL₂, DOL₃, and *t* through the above formulas, the compressive stresses in the third region, in the portion of the second region excluding the third region, and in the portion of the first region excluding the second region are defined. In combination with the thickness settings for the third region, the portion of the second region excluding the third region, and the portion of the first region excluding the second region, this arrangement makes it difficult for the impact or impact cracks to penetrate the third region, the second region, and the first region and to reach the center of the glass, thereby improving the fragmentation resistance of the glass.

The formula (CS₀+CS₁)*DOL₁+(CS₁+CS₂)*(DOL₂-DOL₁)+CS₂*(DOL₃-DOL₂) ≤ 24**t* is mainly used to define the compressive stresses of the first region, the second region, and the third region, thereby improving the fragmentation resistance of the glass while reducing the magnitude of the tensile stress in the central region, which in turn enhances the surface needle-drop performance of the glass. The condition CS₀ ≥ 600 MPa is mainly used to ensure that the glass possesses a general chemically strengthened level of bending fracture resistance. The condition DOL₁+DOL₂+DOL₃ ≥ 0.25*t* is mainly used to provide the glass with a total depth of the stress layer as large as possible at a relatively small thickness, so as to resist the penetration of sharp objects into the tensile stress layer. The above three defining formulas cooperate with each other to jointly define the compressive stress of each region, the thickness of each region, and the thickness of the glass.

Therefore, while ensuring that the glass possesses a general chemically strengthened level of bending fracture resistance and a relatively small thickness, the disclosure defines the relationships among CS₀, CS₁, DOL₁, CS₂, DOL₂, DOL₃, and *t* through the formulas, so that the first region, the second region, and the third region of the glass cooperate to improve the fragmentation resistance of the glass against common heavy scratches, sharp-object pressing, and impact, thereby further improving the surface needle-drop performance of the glass.

In the glass, CS₀, CS₁, and DOL₁ satisfy the following conditions: 600 MPa ≤ CS₀ ≤ 900 MPa, 200 MPa ≤ CS₁ ≤ 300 MPa, and 0.005 mm ≤ DOL₁ ≤ 0.015 mm.

In the glass, CS₂ and DOL₂ satisfy the following conditions: 5 MPa ≤ CS₂ ≤ 15 MPa, and 0.035 mm ≤ DOL₂ ≤ 0.055 mm.

In the glass, DOL₃ and *t* satisfy the following conditions: DOL₃ ≥ 0.25*t*, and 0.7 mm ≤ *t* ≤ 1.2 mm.

The glass further satisfies the following condition: (CS₀-CS₁)/DOL₁ ≥ 2.5*(CS₁-CS₂)/(DOL₂-DOL₁).

A central tensile stress CT of the glass satisfies the following condition: CT ≤ 30 MPa.

The first region is formed by the thermal strengthening process, the second region is formed by the first ion-exchange process, and the third region is formed by the second ion-exchange process.

A second aspect of the disclosure provides a manufacturing method of a glass, which includes the following. A glass to be processed is provided. A thermal strengthening process is performed on the glass to be processed to obtain a first strengthened glass. A first ion-exchange process is performed on the first strengthened glass to obtain a second strengthened glass. A second ion-exchange process is performed on the second strengthened glass to obtain the glass according to the first aspect of the disclosure.

In the manufacturing method of a glass according to the second aspect of the disclosure, the glass provided in the first aspect of the disclosure is prepared. While ensuring that the glass possesses a general chemically strengthened level of bending fracture resistance and a relatively small thickness, the disclosure defines the relationships among CS₀, CS₁, DOL₁, CS₂, DOL₂, DOL₃, and *t* through the formulas, so that the first region, the second region, and the third region of the glass cooperate with each other to improve the fragmentation resistance of the glass against common heavy scratches, sharp-object pressing, and impact, thereby further improving the surface needle-drop performance of the glass.

The thermal strengthening process is performed on the glass to be processed as follows. A surface compressive stress σ₁ of the glass to be processed is made to satisfy the following condition: 5 MPa ≤ σ₁ ≤ 15 MPa, and in the glass to be processed, DOL₃ and *t* are made to satisfy: DOL₃ ≥ 0.25*t* and 0.7 mm ≤ *t* ≤ 1.2 mm, to obtain the first strengthened glass.

During the thermal strengthening process, a heating treatment at a temperature T1 is performed on the glass to be processed, and a cooling treatment at a wind pressure P is performed on the heated glass to be processed. T1 and P satisfy the following conditions: 550°C ≤ T1 ≤ 750°C, and 50 mmWC ≤ P ≤ 220 mmWC.

The first ion-exchange process is performed on the first strengthened glass as follows. A surface compressive stress σ₂ of the first strengthened glass is made to satisfy the following condition: 300 MPa ≤ σ₂ ≤ 500 MPa, and in the first strengthened glass, CS₂ and DOL₂ are made to satisfy the following conditions: 5 MPa ≤ CS₂ ≤ 15 MPa and 0.035 mm ≤ DOL₂ ≤ 0.055 mm, to obtain the second strengthened glass.

During the first ion-exchange process, the first strengthened glass satisfies one of the following. A mixed salt bath of potassium nitrate and sodium nitrate is adopted, where a mass ratio of potassium nitrate to sodium nitrate is (80-95):(5-20), a temperature of the first ion-exchange process is T₂, a duration of the first ion-exchange process is C₁, and T₂ and C₁ satisfy the following conditions: 380°C ≤ T₂ ≤ 450°C, and 60 min ≤ C₁ ≤ 150 min. Alternatively, a potassium nitrate salt bath is adopted, where a proportion of potassium nitrate in salt is not less than 95%. The first ion-exchange process includes an ion-exchange sub-process and an ion-migration sub-process, a temperature of the ion-exchange sub-process is T₃, a duration of the ion-exchange sub-process is C₂, and T₃ and C₂ satisfy the following conditions: 380°C ≤ T₃ ≤ 450°C, and 50 min ≤ C₂ ≤ 100 min; the ion-migration sub-process is carried out not by immersion in the potassium nitrate salt bath but in air, a migration temperature is T₄, a migration duration is C₃, and T₄ and C₃ satisfy the following conditions: 450°C ≤ T₄ ≤ 500°C, and 10 min ≤ C₃ ≤ 60 min. Alternatively, an ion-exchange barrier layer is formed on the first strengthened glass, and the potassium nitrate salt bath is adopted, where the proportion of potassium nitrate in salt is not less than 95%, the temperature of the first ion-exchange process is T₅, the duration of the first ion-exchange process is C₄, and T₅ and C₄ satisfy the following conditions: 380°C ≤ T₅ ≤ 450°C, and 90 min ≤ C₄ ≤ 180 min.

The second ion-exchange process is performed on the second strengthened glass as follows. A surface compressive stress σ₃ of the second strengthened glass is made to satisfy the following condition: 600 MPa ≤ σ₃ ≤ 900 MPa, and in the second strengthened glass, CS₁ and DOL₁ are made to satisfy the following conditions: 200 MPa ≤ CS₁ ≤ 300 MPa and 0.005 mm ≤ DOL₁ ≤ 0.015 mm, to obtain the glass.

During the second ion-exchange process, a potassium nitrate salt bath is adopted. A proportion of potassium nitrate in salt is not less than 95%, a temperature of the second ion-exchange process is T₆, a duration of the second ion-exchange process is C₅, and T₆ and C₅ satisfy the following conditions: 400°C ≤ T₆ ≤ 450°C, and 120 s ≤ C₅ ≤ 600 s.

A third aspect of the disclosure provides a glass assembly. The glass assembly includes an interlayer, a first glass, and a second glass. The first glass is the glass according to the first aspect of the disclosure, and the first glass and the second glass are respectively disposed on opposite sides of the interlayer.

In the glass assembly provided in the third aspect of the disclosure, the glass provided in the first aspect of the disclosure is adopted. While ensuring that the first glass possesses a general chemically strengthened level of bending fracture resistance and a relatively small thickness, the disclosure defines the relationships among CS₀, CS₁, DOL₁, CS₂, DOL₂, DOL₃, and *t* through the formulas, so that the first region, the second region, and the third region of the first glass cooperate with each other to improve the fragmentation resistance of the first glass against common heavy scratches, sharp-object pressing, and impact, thereby further improving the surface needle-drop performance of the first glass.

When a falling needle having a diameter of 4.6 mm, a length of 25 mm, a total mass of 3.2 g, and a diamond tip angle of 120° is dropped onto a surface of the first glass facing away from the interlayer, a needle-drop height H₁ at which the falling needle is dropped onto the surface of the first glass facing away from the interlayer satisfies the following condition: H₁ ≥ 200 mm.

When a falling needle having a diameter of 4.6 mm, a length of 25 mm, a total mass of 3.2 g, and a diamond tip angle of 120° is dropped onto a surface of the second glass facing away from the interlayer, a needle-drop height H₂ at which the falling needle is dropped onto the surface of the second glass facing away from the interlayer satisfies the following condition: H₂ ≥ 300 mm.

A fourth aspect of the disclosure provides a vehicle. The vehicle includes a vehicle body and the glass assembly according to the third aspect of the disclosure. The glass assembly is mounted on the vehicle body; and in the glass assembly, the first glass is closer to an interior space of the vehicle body than the second glass.

In the vehicle provided in the fourth aspect of the disclosure, the glass assembly provided in the third aspect of the disclosure is adopted. While ensuring that the first glass in the glass assembly possesses a general chemically strengthened level of bending fracture resistance and a relatively small thickness, the disclosure defines the relationships among CS₀, CS₁, DOL₁, CS₂, DOL₂, DOL₃, and *t* through the formulas, so that the first region, the second region, and the third region of the first glass cooperate with each other to improve the fragmentation resistance of the first glass against common heavy scratches, sharp-object pressing, and impact, thereby further improving the surface needle-drop performance of the first glass.

### BRIEF DESCRIPTION OF THE DRAWINGS

In order to more clearly illustrate the technical solutions in the embodiments of the disclosure, the drawings required for describing the embodiments of the disclosure will be briefly introduced below.
FIG. 1 is a schematic distribution curve diagram of glass thickness versus compressive stress of a glass in an embodiment of the disclosure.
FIG. 2 is a schematic structural view of a glass in an embodiment of the disclosure.
FIG. 3 is a process flow chart of a manufacturing method of a glass in an embodiment of the disclosure.
FIG. 4 is a schematic structural view of a glass assembly in an embodiment of the disclosure.

Reference signs: glass-1, first region-11, second region-12, third region-13, glass assembly-2, first glass-21, interlayer-22, second glass-23.

### DETAILED DESCRIPTION

The following are preferred embodiments of the disclosure. It may be noted that, for those of ordinary skill in the art, several improvements and modifications can be made without departing from the principle of the disclosure, and these improvements and modifications are also regarded as the protection scope of the disclosure.

Before introducing the technical solutions of the disclosure, the technical problem in the related art is first described in detail.

Ultra-thin chemically strengthened glass with a thickness of 1.1 mm or below, when applied to laminated automotive window glass, serves to reduce the overall glass thickness and enhance the overall bending strength and stiffness of the laminated glass. However, such thin chemically strengthened glass is susceptible to local damage, for example, point impact damage or linear scratch damage, caused by scraping, bumping, hard object impact, and the like during vehicle service. When the depth of the local damage reaches or approaches the depth achieved by a single ion-exchange strengthening process, the local damage easily propagates and extends under the central tensile stress. Consequently, large-area cracks that originate at the damage point and extend in one or more directions to edges of the glass, resulting in fragmented pieces.

In the field of automotive glass, a needle-drop test (also known as a stone-chip resistance test) is generally used to evaluate the crack propagation behavior of the glass surface after being damaged by an indeterminate hard object. The test procedure is as follows. A steel cylinder with a diamond tip (hereinafter referred to as the "needle", with a diameter of 4.6 mm, a length of 25 mm, a total mass of 3.2 g, a diamond tip angle of 120°, and a tip radius of 0.1 mm) is placed in a rigid vertical tube and allowed to fall freely. Starting from a minimum drop height (hmin), impacts are performed at all designated impact points. The minimum drop height (hmin) is the height corresponding to a preset minimum impact resistance requirement. Thereafter, the drop height is increased in increments of 50 mm for subsequent impacts until the glass fractures. The spacing between impact points shall be at least 4 mm. The maximum drop height at which the edges and the center of the glass can withstand the needle impact without crack propagation is measured. The needle-drop height is mainly related to the glass thickness and stress distribution, and exhibits a phenomenon that a greater strengthening stress of the glass corresponds to a lower needle-drop height. Existing experiments show that the greater the central tensile stress of the glass, the lower the needle-drop height the glass can withstand. For glass of the same thickness but different strengthening states, the needle-drop heights may be ranked as follows: raw glass > physically thermally strengthened glass > physically semi-tempered glass > physically fully tempered glass (exhibiting an inverse correlation with the degree of strengthening of the glass). For chemically strengthened glass, since the thickness of the stress layer is on the micrometer scale, the central tensile stress is strongly correlated with the glass thickness. When the thickness of the chemically strengthened glass is 2 mm or more, the needle-drop height of the chemically strengthened glass is comparable to the needle-drop height of physically semi-tempered glass. However, when the glass thickness is further reduced (less than or equal to 1.1 mm), under the condition that the surface compressive stress and the depth of the stress layer remain unchanged, the central tensile stress of the glass increases significantly. In this case, the needle-drop height of the chemically strengthened glass is even lower than the needle-drop height of physically fully tempered glass. As a result, although the bending strength of the glass is very high, the performance in resisting fragmentation upon impact by a highhardness sharp object is greatly reduced. That is, the glass surface has a very low tolerance for new defects, and crack propagation occurs upon even very small-sized damage. In practice, sporadic fragmentation has also been reported from end users.

However, although raw glass and glass in a low-stress state exhibit relatively high needle-drop performance, automotive glass is also required to have a certain ability to resist bending deformation without fracture, and this mechanical property in turn exhibits a strong positive correlation with the surface compressive stress of the glass. Therefore, pursuing both a high bending strength and satisfactory needle-drop performance proves contradictory for glass with a thickness of 1.2 mm or below, and the two performances cannot be achieved under existing technical conditions.

Therefore, in order to solve the above problems, the disclosure provides a glass, which solves the problem that a surface of a chemically strengthened thin glass is prone to crack propagation when impacted by a hard sharp object. Therefore, the needle-drop performance of an inner surface of a chemically strengthened laminated glass is improved, enabling the surface of the chemically strengthened glass to withstand common heavy scratches, sharp-object pressing, and impact without crack propagation, thereby reducing the probability of spontaneous fragmentation. In addition, the thin glass retains a general chemically strengthened level of bending fracture resistance, thereby solving the problem that these two conflicting mechanical properties cannot be achieved in glass with a thickness of 1.2 mm or below.

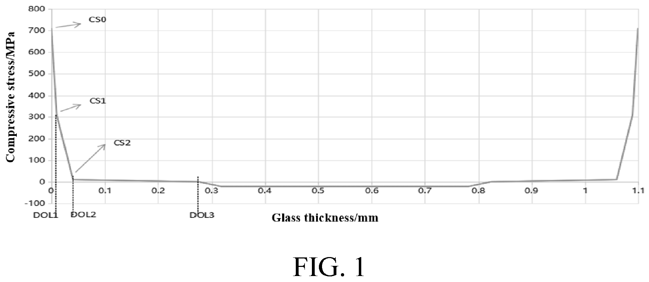

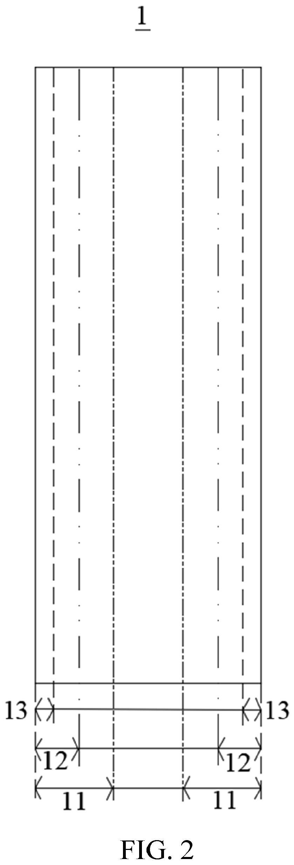

Reference is made to FIG. 1 and FIG. 2. FIG. 1 is a schematic distribution curve diagram of glass thickness versus compressive stress of a glass in an embodiment of the disclosure. FIG. 2 is a schematic structural view of a glass in an embodiment of the disclosure.

In the embodiment, a glass 1 is provided. The glass 1 has a first region 11, a second region 12, and a third region 13. The second region 12 is located within the first region 11, and the third region 13 is located within the second region 12; the first region 11, the second region 12, and the third region 13 each extend from an outer surface of the glass 1 toward a center of the glass 1, and the glass 1 satisfies the following conditions:$\left({CS}_{0}+{CS}_{1}\right) ∗ {DOL}_{1} + \left({CS}_{1}+{CS}_{2}\right) ∗ \left({DOL}_{2}-{DOL}_{1}\right) + {CS}_{2} \left({DOL}_{3}-{DOL}_{2}\right) \leq 24 ∗ t , {CS}_{0} \geq 600 MPa ,$ and DOL₁+DOL₂+DOL₃ ≥ 0.25*t*. CS₀ represents a surface compressive stress of the glass 1, CS₁ represents a knee stress of the glass 1 between a first ion-exchange process and a second ion-exchange process, DOL₁ represents a knee depth of the glass 1 between the first ion-exchange process and the second ion-exchange process, CS₂ represents a knee stress of the glass 1 between a thermal strengthening process and the first ion-exchange process, DOL₂ represents a knee depth of the glass 1 between the thermal strengthening process and the first ion-exchange process, DOL₃ represents a stress depth of the glass 1 by the thermal strengthening process, and *t* represents a thickness of the glass 1.

In an embodiment, the first region 11 is formed by the thermal strengthening process, the second region 12 is formed by the first ion-exchange process, and the third region 13 is formed by the second ion-exchange process.

As illustrated in FIG. 2, the first region 11 may be understood as a region of the glass 1 formed by the thermal strengthening process. The second region 12 is located within the first region 11, and the second region 12 may be understood as a region formed by both the thermal strengthening process and the first ion-exchange process. The third region 13 is located within the second region 12, that is, the third region 13 is also located within the first region 11, and the third region 13 may be understood as a region formed by not only the thermal strengthening process, but also the first ion-exchange process and the second ion-exchange process. Moreover, the first region 11, the second region 12, and the third region 13 each extend from the outer surface of the glass 1 toward the center of the glass 1.

The first region 11 is first formed by performing the thermal strengthening process on the glass 1, then the second region 12 is formed through the first ion-exchange process, and then the third region 13 is formed through the second ion-exchange process. In the glass 1, the relationships among CS₀, CS₁, DOL₁, CS₂, DOL₂, DOL₃, and *t* conform to the above formulas. Therefore, the first region 11, the second region 12, and the third region 13 of the glass 1 are coordinated to improve the fragmentation resistance of the glass 1, so that after the glass 1 is subjected to an impact, cracks will not propagate toward the center and cannot reach the center of the glass 1. It may be noted that, when a defect formed by the impact reaches the central tensile stress layer, under the influence of the central tensile stress, cracks will propagate in the horizontal direction to the surroundings. In other words, the purpose of a compressive stress layer having a greater depth of layer (DOL) is to prevent the impact defect from easily reaching the central tensile stress layer. Moreover, the central tensile stress is controlled to be relatively small, so as to prevent cracks from propagating after the defect reaches the central tensile stress layer.

CS₀ represents the surface compressive stress of the outer surface of the glass 1. CS₁ also represents the compressive stress at the interface between the portion of the third region 13 away from the outer surface of the glass 1 and the second region 12. DOL₁ also represents the thickness of the third region 13. CS₂ also represents the compressive stress at the interface between the portion of the second region 12 away from the outer surface of the glass 1 and the first region 11. DOL₂ also represents the thickness of the second region 12. DOL₃ also represents the thickness of the first region 11.

Optionally, the compressive stress of the third region 13 is greater than the compressive stress of the portion of the second region 12 excluding the third region 13. The compressive stress of the portion of the second region 12 excluding the third region 13 is greater than the compressive stress of the portion of the first region 11 excluding the second region 12.

Optionally, the thickness of the third region 13 is smaller than the thickness of the portion of the second region 12 excluding the third region 13. The thickness of the portion of the second region 12 excluding the third region 13 is smaller than the thickness of the portion of the first region 11 excluding the second region 12.

Optionally, the glass 1 further includes a central region. The central region is farther away from the outer surface of the glass 1 than the first region 11, and the first region 11 is disposed around the central region. The tensile stress of the central region is smaller than the compressive stress of the first region 11. Further optionally, the tensile stress of the central region is smaller than the compressive stress of the portion of the first region 11 excluding the second region 12. Further optionally, the thickness of the central region is greater than the thickness of the first region 11. Still further optionally, the thickness of the central region is greater than the thickness of the portion of the first region 11 excluding the second region 12.

In the related art, when the glass 1 is subjected to common heavy scratches, sharp-object pressing, or impact, the impact or impact cracks pass through the outer surface of the glass 1 and reach the center of the glass 1, causing the glass 1 to fracture. However, in the disclosure, when the glass 1 is subjected to common heavy scratches, sharp-object pressing, or impact, the impact or impact cracks need to pass through the third region 13, the portion of the second region 12 excluding the third region 13, and the portion of the first region 11 excluding the second region 12, before reaching the center of the glass 1. In other words, when the glass 1 is subjected to common heavy scratches, sharp-object pressing, or impact, the impact or impact cracks need to pass through the third region 13, the second region 12, and the first region 11 before reaching the center of the glass 1.

Specifically, by defining the relationships among CS₀, CS₁, DOL₁, CS₂, DOL₂, DOL₃, and *t* through the above formulas, the compressive stresses in the third region 13, in the portion of the second region 12 excluding the third region 13, and in the portion of the first region 11 excluding the second region 12 are defined. In combination with the thickness settings for the third region 13, the portion of the second region 12 excluding the third region 13, and the portion of the first region 11 excluding the second region 12, this arrangement makes it difficult for the impact or impact cracks to penetrate the third region 13, the second region 12, and the first region 11 and to reach the center of the glass 1, thereby improving the fragmentation resistance of the glass 1.

The formula (CS₀+CS₁)*DOL₁+(CS₁+CS₂)*(DOL₂-DOL₁)+CS₂*(DOL₃-DOL₂) ≤ 24**t* is mainly used to define the compressive stresses of the first region 11, the second region 12, and the third region 13, thereby improving the fragmentation resistance of the glass 1 while reducing the magnitude of the tensile stress in the central region, which in turn enhances the surface needle-drop performance of the glass 1. The condition CS₀ ≥ 600 MPa is mainly used to ensure that the glass 1 possesses a general chemically strengthened level of bending fracture resistance. The condition DOL₁+DOL₂+DOL₃ ≥ 0.25*t* is mainly used to provide the glass 1 with a total depth of the stress layer as large as possible at a relatively small thickness, so as to resist the penetration of sharp objects into the tensile stress layer, thereby improving the needle-drop performance of the glass 1. The above three defining formulas cooperate with each other to jointly define the compressive stress of each region, the thickness of each region, and the thickness of the glass 1.

Therefore, while ensuring that the glass 1 possesses a general chemically strengthened level of bending fracture resistance and a relatively small thickness, the disclosure defines the relationships among CS₀, CS₁, DOL₁, CS₂, DOL₂, DOL₃, and *t* through the formulas, so that the first region 11, the second region 12, and the third region 13 of the glass 1 cooperate to improve the fragmentation resistance of the glass 1 against common heavy scratches, sharp-object pressing, and impact, thereby further improving the surface needle-drop performance of the glass 1.

Reference is made to FIG. 1 to FIG. 2. In an embodiment, in the glass 1, CS₀, CS₁, and DOL₁ satisfy the following conditions: 600 MPa ≤ CS₀ ≤ 900 MPa, 200 MPa ≤ CS₁ ≤ 300 MPa, and 0.005 mm ≤ DOL₁ ≤ 0.015 mm.

Optionally, CS₀ may be 650 MPa, or 700 MPa, or 750 MPa, or 800 MPa, or 850 MPa, etc. Optionally, CS₁ may be 220 MPa, or 250 MPa, or 280 MPa, etc. Optionally, DOL₁ may be 0.008 mm, or 0.010 mm, or 0.012 mm, etc.

In the embodiment, by defining CS₀ to be in a range of 600 MPa - 900 MPa, the outer surface of the glass 1 maintains a relatively high compressive stress, so that the glass 1 possesses a relatively high bending fracture resistance. Moreover, by defining CS₀ and CS₁, the compressive stress of the third region 13 shows a decreasing trend from the outer surface of the glass 1 to the center of the glass 1, thereby improving the fragmentation resistance of the glass 1 against common heavy scratches, sharp-object pressing, and impact, thereby further improving the surface needle-drop performance of the glass 1. Meanwhile, the compressive stresses of CS₀ and CS₁ are relatively large, so that the third region 13 of the glass 1 possesses a relatively high bending fracture resistance. Furthermore, DOL₁ is defined in the embodiment, so that the third region 13 improves the surface needle-drop performance of the glass 1 while maintaining a relatively small thickness.

Reference is made to FIG. 1 to FIG. 2. In an embodiment, in the glass 1, CS₂ and DOL₂ satisfy the following conditions: 5 MPa ≤ CS₂ ≤ 15 MPa, and 0.035 mm ≤ DOL₂ ≤ 0.055 mm.

Optionally, CS₂ may be 8 MPa, or 10 MPa, or 12 MPa, etc. Optionally, DOL₂ may be 0.040 mm, or 0.045 mm, or 0.050 mm, etc.

In the embodiment, CS₂ is defined to cooperate with CS₀ and CS₁. From the outer surface of the glass 1 to the center of the glass 1, the compressive stress of the third region 13 and the compressive stress of the portion of the second region 12 excluding the third region 13 show a decreasing trend, or in other words, the compressive stress of the second region 12 shows a decreasing trend. This further improves the fragmentation resistance of the glass 1 against common heavy scratches, sharp-object pressing, and impact. Accordingly, the impact or impact cracks can barely penetrate the third region 13 and the portion of the second region 12 excluding the third region 13, making it difficult for impact or impact cracks to reach the center of the glass 1, and ultimately enhancing the surface needle-drop performance of the glass 1.

Moreover, DOL₂ is defined in the embodiment. On the one hand, the portion of the second region 12 excluding the third region 13 improves the surface needle-drop performance of the glass 1 while maintaining a relatively small thickness. On the other hand, DOL₂ can cooperate with DOL₁, such that the thickness of the portion of the second region 12 excluding the third region 13 is greater than the thickness of the third region 13, thereby making it more difficult for the impact or impact cracks to penetrate the portion of the second region 12 excluding the third region 13, further increasing the difficulty for the impact or impact cracks to reach the center of the glass 1, thereby enhancing the surface needle-drop performance of the glass 1.

Reference is made to FIG. 1 to FIG. 2. In an embodiment, in the glass 1, DOL₃ and *t* satisfy the following conditions: DOL₃ ≥ 0.25*t*, and 0.7 mm ≤ *t* ≤ 1.2 mm.

Optionally, t may be 0.9 mm, or 1 mm, or 1.1 mm, etc. Optionally, DOL₃ ≥ 0.175 mm. Further optionally, 0.175 mm ≤ DOL₃ ≤ 0.3 mm. DOL₃ may be 0.2 mm, or 0.25 mm, or 0.28 mm, etc. Optionally, the compressive stress of the portion of the first region 11 away from the outer surface of the glass 1 is 0 MPa.

In the embodiment, by defining the portion of the first region 11 excluding the second region 12 to cooperate with CS₂, CS₀, and CS₁, the compressive stress of the third region 13, the compressive stress of the portion of the second region 12 excluding the third region 13, and the compressive stress of the portion of the first region 11 excluding the second region 12 show a decreasing trend from the outer surface of the glass 1 to the center of the glass 1, or in other words, the compressive stress of the first region 11 shows a decreasing trend. This further improves the fragmentation resistance of the glass 1 against common heavy scratches, sharp-object pressing, and impact. Accordingly, the impact or impact cracks can barely penetrate the third region 13, the portion of the second region 12 excluding the third region 13, and the portion of the first region 11 excluding the second region 12, making it difficult for the impact or impact cracks to reach the center of the glass 1, thereby further enhancing the surface needle-drop performance of the glass 1.

Moreover, the relationship between DOL₃ and *t* is defined in the embodiment. On the one hand, the portion of the first region 11 excluding the second region 12 improves the surface needle-drop performance of the glass 1 while maintaining a relatively small thickness. On the other hand, DOL₃ can cooperate with DOL₂ and DOL₁, such that the thickness of the portion of the first region 11 excluding the second region 12 is greater than the thickness of the portion of the second region 12 excluding the third region 13, thereby making it even more difficult for the impact or impact cracks to penetrate the portion of the first region 11 excluding the second region 12, further increasing the difficulty for the impact or impact cracks to reach the center of the glass 1, thereby enhancing the surface needle-drop performance of the glass 1.

Reference is made to FIG. 1 to FIG. 2. In an embodiment, the glass 1 further satisfies the following condition: (CS₀-CS₁)/DOL₁ ≥ 2.5*(CS₁-CS₂)/(DOL₂-DOL₁).

In the embodiment, the relationship between the stress slope before the knee depth DOL₁ and the stress slope between DOL₁ and DOL₂ is defined through the above formula, thereby defining the stress variation slope of the third region 13 and the portion of the second region 12 excluding the third region 13, so that the compressive stresses of the third region 13 and the portion of the second region 12 excluding the third region 13 are lower, thereby making it even more difficult for the impact or impact cracks to penetrate the third region 13 and the portion of the second region 12 excluding the third region 13, further enhancing the surface needle-drop performance of the glass 1.

In an embodiment, a central tensile stress CT of the glass 1 satisfies the following condition: CT ≤ 30 MPa.

Optionally, the central tensile stress CT may be 5 MPa, or 10 MPa, or 15 MPa, or 20 MPa, or 25 MPa, etc. In this embodiment, the central tensile stress CT of the glass 1 is limited, so that the glass 1 possesses a relatively low central tensile stress, improving the fragmentation resistance of the glass 1 against common heavy scratches, sharp-object pressing, and impact, thereby enhancing the surface needle-drop performance of the glass 1.

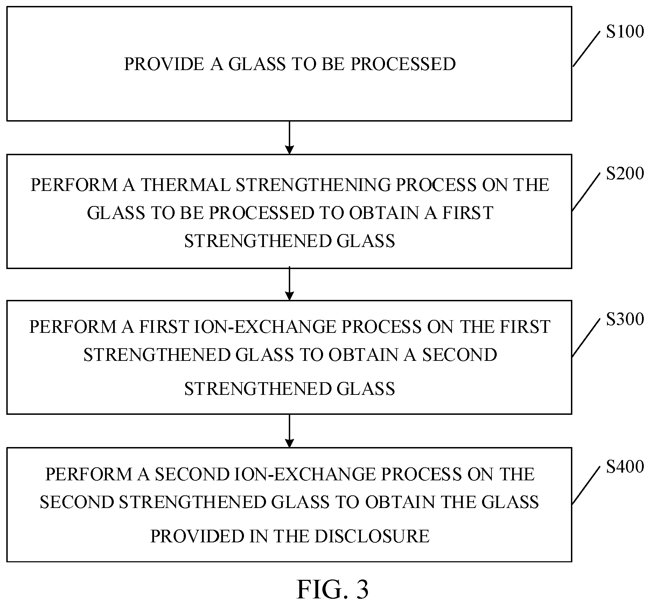

Reference is made to FIG. 1 to FIG. 3. FIG. 3 is a process flow chart of a manufacturing method of a glass in an embodiment of the disclosure. The disclosure also provides a manufacturing method of the glass 1, and the manufacturing method includes the following.

At S100, a glass to be processed is provided.

At S200, a thermal strengthening process is performed on the glass to be processed to obtain a first strengthened glass.

In an embodiment, the thermal strengthening process is performed on the glass to be processed as follows. A surface compressive stress σ₁ of the glass to be processed is made to satisfy the following condition: 5 MPa ≤ σ1 ≤ 15 MPa, and in the glass to be processed, DOL₃ and *t* are made to satisfy: DOL₃ ≥ 0.25*t* and 0.7 mm ≤ *t* ≤ 1.2 mm, to obtain the first strengthened glass.

In an embodiment, during the thermal strengthening process, a heating treatment at a temperature T₁ is performed on the glass to be processed, and a cooling treatment at a wind pressure P is performed on the heated glass to be processed; and T₁ and P satisfy the following conditions: 550°C ≤ T₁ ≤ 750°C, and 50 mmWC ≤ P ≤ 220 mmWC.

The surface compressive stress of the glass 1 is lower than the surface compressive stress of physical tempering glass (cooling wind pressure being greater than or equal to 600 mmWC) and physical semi-tempering glass (cooling wind pressure being greater than or equal to 300 mmWC).

Optionally, the thermal strengthening process is performed on the glass to be processed as follows. A bending treatment is performed on the glass to be processed, so that the glass to be processed is in a bent shape.

The thermal strengthening process is performed above the Tg point (glass transition temperature) of the glass 1, and a bending process may be conducted concurrently to shape the glass as required. In subsequent processes, both the first ion-exchange process and the second ion-exchange process are conducted below the Tg point of the glass 1, without altering the shape of the glass 1.

At S300, a first ion-exchange process is performed on the first strengthened glass to obtain a second strengthened glass.

In an embodiment, the first ion-exchange process is performed on the first strengthened glass as follows. A surface compressive stress σ₂ of the first strengthened glass is made to satisfy the following condition: 300 MPa ≤ σ₂ ≤ 500 MPa, and in the first strengthened glass, CS₂ and DOL₂ are made to satisfy the following conditions: 5 MPa ≤ CS₂ ≤ 15 MPa and 0.035 mm ≤ DOL₂ ≤ 0.055 mm, to obtain the second strengthened glass.

In an embodiment, during the first ion-exchange process, the first strengthened glass satisfies one of the following. A mixed salt bath of potassium nitrate and sodium nitrate is adopted, where a mass ratio of potassium nitrate to sodium nitrate is (80-95):(5-20), a temperature of the first ion-exchange process is T₂, a duration of the first ion-exchange process is C₁, and T₂ and C₁ satisfy the following conditions: 380°C ≤ T₂ ≤ 450°C, and 60 min ≤ C₁ ≤ 150 min. Alternatively, a potassium nitrate salt bath is adopted, where a proportion of potassium nitrate in salt is not less than 95%, the first ion-exchange process includes an ion-exchange sub-process and an ion-migration sub-process, a temperature of the ion-exchange sub-process is T₃, a duration of the ion-exchange sub-process is C₂, and T₃ and C₂ satisfy the following conditions: 380°C ≤ T₃ ≤ 450°C, and 50 min ≤ C₂ ≤ 100 min; the ion-migration sub-process is carried out not by immersion in the potassium nitrate salt bath but in air, a migration temperature is T₄, a migration duration is C₃, and T₄ and C₃ satisfy the following conditions: 450°C ≤ T₄ ≤ 500°C, and 10 min ≤ C₃ ≤ 60 min. In other words, a potassium nitrate salt bath with a proportion of ≥ 95% is adopted, ion exchange is performed at a temperature ranging from 380°C to 450°C for 50 min to 100 min, and then ion migration is performed at a temperature ranging from 450°C to 500°C for 10 min to 60 min, so as to reduce the surface compressive stress and achieve the required DOL₂. Alternatively, an ion-exchange barrier layer is formed on the first strengthened glass, and the potassium nitrate salt bath is adopted, where the proportion of potassium nitrate in salt is not less than 95%, the temperature of the first ion-exchange process is T₅, the duration of the first ion-exchange process is C₄, and T₅ and C₄ satisfy the following conditions: 380°C ≤ T₅ ≤ 450°C, and 90 min ≤ C₄ ≤ 180 min.

In the embodiment, various technical solutions for the first ion-exchange process are provided, which may be flexibly selected and used according to the material and type of the glass to be processed.

At S400, a second ion-exchange process is performed on the second strengthened glass to obtain the glass 1 as provided above in the disclosure.

In an embodiment, the second ion-exchange process is performed on the second strengthened glass as follows. A surface compressive stress σ₃ of the second strengthened glass is made to satisfy the following condition: 600 MPa ≤ σ₃ ≤ 900 MPa, and in the second strengthened glass, CS₁ and DOL₁ are made to satisfy the following conditions: 200 MPa ≤ CS₁ ≤ 300 MPa and 0.005 mm ≤ DOL₁ ≤ 0.015 mm, to obtain the glass 1.

σ₃ is equal to CS₀, which is the surface compressive stress of the finally obtained glass 1.

In an embodiment, during the second ion-exchange process, a potassium nitrate salt bath is adopted. A proportion of potassium nitrate in salt is not less than 95%, a temperature of the second ion-exchange process is T₆, a duration of the second ion-exchange process is C₅, and T₆ and C₅ satisfy the following conditions: 400°C ≤ T₆ ≤ 450°C, and 120 s ≤ C₅ ≤ 600 s.

Therefore, in the manufacturing method of the glass 1 of the embodiment, the glass 1 provided above in the disclosure is prepared. While ensuring that the glass 1 possesses a general chemically strengthened level of bending fracture resistance and a relatively small thickness, the disclosure defines the relationships among CS₀, CS₁, DOL₁, CS₂, DOL₂, DOL₃, and *t* through the formulas, so that the first region 11, the second region 12, and the third region 13 of the glass 1 cooperate with each other to improve the fragmentation resistance of the glass 1 against common heavy scratches, sharp-object pressing, and impact, thereby further improving the surface needle-drop performance of the glass 1.

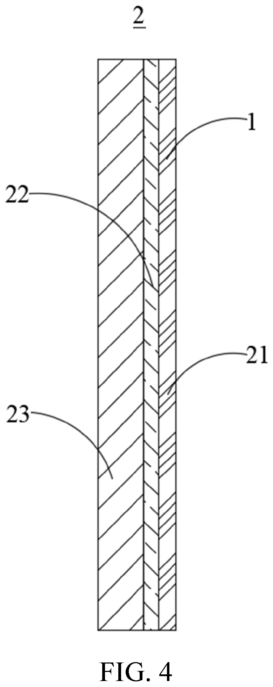

Reference is made to FIG. 1, FIG. 2, and FIG. 4. FIG. 4 is a schematic structural view of a glass assembly in an embodiment of the disclosure. The disclosure further provides a glass assembly 2. The glass assembly 2 includes an interlayer 22, a first glass 21, and a second glass 23. The first glass 21 is the glass 1 provided above in the disclosure, and the first glass 21 and the second glass 23 are respectively disposed on opposite sides of the interlayer 22.

Optionally, the first glass 21 is an aluminosilicate glass. Further optionally, the composition of the aluminosilicate glass includes but is not limited to the following oxide components: 50%-70% of SiO₂, 4%-22% of Al₂O₃, 8%-18% of Na₂O, 0%-5% of Li₂O, 0%-1% of CaO, 1%-5% of MgO, 0%-10% of K₂O, 0%-0.08% of Fe₂O₃, 0%-2% of ZrO₂, 0%-5% of B₂O₃.

Optionally, the second glass 23 is a soda-lime silicate glass. The thickness of the second glass 23 ranges from 1.6 mm to 5.0 mm. The second glass 23 is physically strengthened.

In an embodiment, when a falling needle having a diameter of 4.6 mm, a length of 25 mm, a total mass of 3.2 g, and a diamond tip angle of 120° is dropped onto a surface of the first glass 21 facing away from the interlayer 22, a needle-drop height H₁ at which the falling needle is dropped onto the surface of the first glass 21 facing away from the interlayer 22 satisfies the following condition: H₁ ≥ 200 mm.

Optionally, the needle-drop height H₁ may be 220 mm, or 240 mm, or 250 mm, etc. In the glass assembly 2 of the embodiment, the needle-drop height H₁ of the surface of the first glass 21 facing away from the interlayer 22 may be greater than 200 mm. While ensuring that the first glass 21 possesses a general chemically strengthened level of bending fracture resistance and a relatively small thickness, the disclosure defines the relationships among CS₀, CS₁, DOL₁, CS₂, DOL₂, DOL₃, and *t* through the formulas, so that the first region 11, the second region 12, and the third region 13 of the first glass 21 can cooperate with each other to improve the fragmentation resistance of the first glass 21 against common heavy scratches, sharp-object pressing, and impact, thereby further enhancing the surface needle-drop performance of the first glass 21.

In an embodiment, when a falling needle having a diameter of 4.6 mm, a length of 25 mm, a total mass of 3.2 g, and a diamond tip angle of 120° is dropped onto a surface of the second glass 23 facing away from the interlayer 22, a needle-drop height H₂ at which the falling needle is dropped onto the surface of the second glass 23 facing away from the interlayer 22 satisfies the following condition: H₂ ≥ 300 mm.

For the glass assembly 2 of the embodiment, the needle-drop height H₂ of the surface of the second glass 23 facing away from the interlayer 22 may be greater than 300 mm. Cooperating with the first glass 21, the glass assembly 2 can achieve improved fragmentation resistance of the glass assembly 2 against common heavy scratches, sharp-object pressing, and impact, thereby further enhancing the surface needle-drop performance of the glass 1.

The disclosure provides a vehicle. The vehicle includes a vehicle body and the glass assembly provided above in the disclosure. The glass assembly is mounted on the vehicle body. In the glass assembly, the first glass is closer to an interior space of the vehicle body than the second glass.

In the vehicle provided in the embodiment, the glass assembly provided above in the disclosure is adopted. While ensuring that the first glass in the glass assembly possesses a general chemically strengthened level of bending fracture resistance and a relatively small thickness, the disclosure defines the relationships among CS₀, CS₁, DOL₁, CS₂, DOL₂, DOL₃, and *t* through the formulas, so that the first region, the second region, and the third region of the first glass cooperate with each other to improve the fragmentation resistance of the first glass against common heavy scratches, sharp-object pressing, and impact, thereby further improving the surface needle-drop performance of the first glass.

Embodiments 1-3 and comparative examples 1-10 are provided below to describe the glass assembly in detail. The manufacturing method of the glass assembly is as follows.

First, according to the automotive glass processing flow, a soda-lime glass and an aluminosilicate glass are subjected to cutting and edge grinding, and, if necessary, decorative layers such as ink and silver paste are applied to the soda-lime glass.

Second, the soda-lime-silicate glass is hot-bent and physically strengthened. Depending on the mechanical requirements corresponding to the mounting position of the glass on the vehicle, the strengthening includes, but is not limited to, thermal strengthening, semi-tempering, and full tempering.

Third, the aluminosilicate glass is thermally strengthened and bent to a shape matching that of the soda-lime glass, and a surface compressive stress in the range of 5 MPa to 15 MPa and a depth of stress layer DOL₃ greater than or equal to 0.25*t* are formed on the surface.

Fourth, the aluminosilicate glass obtained in step 3 is subjected to a low-stress ion-exchange strengthening, so that the aluminosilicate glass has a surface compressive stress in the range of 300 MPa to 500 MPa, a DOL₂ in the range of 0.035 mm to 0.055 mm, and a knee stress CS₂ in the range of 5 MPa to 15 MPa formed at DOL₂.

Fifth, the aluminosilicate glass obtained in step 4 is subjected to a high-stress ion-exchange strengthening, so that the aluminosilicate glass has a final surface stress CS₀ in the range of 600 MPa to 900 MPa, a DOL₁ in the range of 0.005 mm to 0.015 mm, and a knee stress CS₁ in the range of 200 MPa to 300 MPa formed at DOL₁, thereby obtaining the compositestrengthened aluminosilicate glass.

Sixth, using a conventional organic interlayer as a raw material, including but not limited to PVB, EVA, etc., the physically strengthened soda-lime glass and the compositestrengthened aluminosilicate glass are laminated together to obtain the automotive glass.

With a door glass as the vehicle mounting position, the soda-lime glass is physically tempered. Embodiments 1 to 3 are produced according to the implementation of the aluminosilicate glass described above. In addition, comparative examples 1 to 10 are produced using existing conventional strengthening means for aluminosilicate glass and processes similar to the disclosure but not satisfying the composite stress conditions of the disclosure. The processing parameters in the embodiments and comparative examples are shown in table 1.

**Table 1 Processing Parameters in Embodiments and Comparative Examples**

| No. | Aluminosilicate glass composition | Thermal strengthening air pressure/mm WC | First ion-exchange strengthening parameters | Second ion-exchange strengthening parameters |
|---|---|---|---|---|
| Embodiment 1 | SiO₂:59.8% Al₂O₃:14.2% Na₂O:12.4% K₂O:7.72% CaO:0.01% MgO:4.81% ZrO₂:0.9% | 50 | 95%KNO₃-440°C-120min | 99%KNO₃-430°C-220s |
| Embodiment 2 | | 100 | 90%KNO₃-430°C-150min | 99%KNO₃-430°C-220s |
| Embodiment 3 | | 200 | 85%KNO₃-430°C-150min | 99.5%KNO₃-430°C-220s |
| Comparative example 1 | | 500 | No strengthening | No strengthening |
| Comparative example 2 | | 100 | No strengthening | No strengthening |
| Comparative example 3 | | No strengthening | 90%KNO₃-430°C-150min | No strengthening |
| Comparative example 4 | | No strengthening | 90%KNO₃-430°C-150min | 99%KNO₃-430°C-220s |
| Comparative example 5 | | 500 | 90%KNO₃-430°C-150min | No strengthening |
| Comparative example 6 | | 500 | 90%KNO₃-430°C-150min | 99%KNO₃-430°C-220s |
| Comparative example 7 | | 100 | 99%KNO₃-430°C-150min | No strengthening |
| Comparative example 8 | | 100 | 99%KNO₃-430°C-150min | 99%KNO₃-430°C-220s |
| Comparative example 9 | | 100 | 90%KNO₃-430°C-150min | No strengthening |
| Comparative example 10 | | 100 | 85%KNO₃-430°C-150min | 90%KNO₃-430°C-220s |

A composite structure of 3.5 mm soda-lime glass and 1.1 mm aluminosilicate glass is selected. After the thin inner sheet of aluminosilicate glass is strengthened according to the schemes of the embodiments and comparative examples, laminated glass is manufactured while keeping other process conditions unchanged. The needle-drop test is used to test the inner surface needle-drop height. Furthermore, 1.1 mm samples of the embodiments and comparative examples are prepared according to the three-point bending method specified in GB/T 34171, and their three-point bending strength is tested. The stress distributions of the embodiments and comparative examples are shown in table 2, and the technical effects are shown in table 3.

**Table 2 Stress Distribution in Embodiments and Comparative Examples**

| No. | CS₀ MPa | CS₁ MPa | DOL₁ mm | CS₂ MPa | DOL₂ mm | DOL₃ mm |
|---|---|---|---|---|---|---|
| Embodiment 1 | 700 | 300 | 0.015 | 8 | 0.036 | 0.28 |
| Embodiment 2 | 700 | 260 | 0.012 | 10 | 0.039 | 0.30 |
| Embodiment 3 | 750 | 220 | 0.009 | 12 | 0.040 | 0.33 |
| Comparative example 1 | 25 | / | 0.34 | / | / | / |
| Comparative example 2 | 13 | / | 0.30 | / | / | / |
| Comparative example 3 | 500 | / | 0.04 | / | / | / |
| Comparative example 4 | 700 | 260 | 0.012 | 0 | 0.040 | / |
| Comparative example 5 | 500 | 30 | 0.04 | 0 | 0.34 | / |
| Comparative example 6 | 700 | 260 | 0.012 | 23 | 0.040 | 0.34 |
| Comparative example 7 | 700 | 10 | 0.04 | 0 | 0.30 | / |
| Comparative example 8 | 700 | 10 | 0.042 | 0 | 0.30 | / |
| Comparative example 9 | 500 | 10 | 0.04 | 0 | 0.30 | / |
| Comparative example 10 | 500 | 220 | 0.012 | 10 | 0.040 | 0.30 |

**Table 3 Technical Effects of Embodiments and Comparative Examples**

| No. | CS₀ | DOL₁+D OL₂+DO L₃ | 0.25*t* | M=(CS₀+CS₁)*DOL₁+ (CS₁+CS₂)*(DOL₂-DO L₁)+ CS₂*(DOL₃-DOL₂) | CT/MPa | 24**t* | Needle-drop height/ mm | Three-point bending strength /MPa |
|---|---|---|---|---|---|---|---|---|
| Embodiment 1 | 700 | 0.331 | 0.275 | 23.42 | 27.55 | 26.4 | 200 | 480 |
| Embodiment 2 | 700 | 0.351 | 0.275 | 21.42 | 25.20 | 26.4 | 200 | 490 |
| Embodiment 3 | 750 | 0.379 | 0.275 | 19.40 | 22.83 | 26.4 | 250 | 510 |
| Comparative example 1 | 25 | 0.34 | 0.275 | 8.5 | 10.00 | 26.4 | 250 | 130 |
| Comparative example 2 | 13 | 0.3 | 0.275 | 3.9 | 4.59 | 26.4 | 250 | 100 |
| Comparative example 3 | 500 | 0.04 | 0.275 | 20 | 23.53 | 26.4 | 200 | 360 |
| Comparative example 4 | 700 | 0.052 | 0.275 | 18.8 | 22.12 | 26.4 | 100 | 470 |
| Comparative example 5 | 500 | 0.38 | 0.275 | 30.2 | 35.53 | 26.4 | 50 | 380 |
| Comparative example 6 | 700 | 0.392 | 0.275 | 28.64 | 33.69 | 26.4 | 100 | 490 |
| Comparative example 7 | 700 | 0.34 | 0.275 | 31 | 36.47 | 26.4 | 50 | 500 |
| Comparative example 8 | 700 | 0.342 | 0.275 | 32.4 | 38.12 | 26.4 | 50 | 500 |
| Comparative example 9 | 500 | 0.34 | 0.275 | 23 | 27.06 | 26.4 | 200 | 370 |
| Comparative example 10 | 500 | 0.352 | 0.275 | 17.68 | 20.80 | 26.4 | 250 | 360 |

As can be seen from table 3, embodiments 1 to 3, which are manufactured by the preparation method provided in the disclosure and conforming to the required stress ranges, possess high bending strength (bending strength being greater than or equal to 450 MPa) and good needle-drop performance, thus balancing the two conflicting mechanical properties of high bending strength and resistance to crack propagation. This enables the chemically strengthened thin glass to be better applied to automotive glass usage scenarios, meeting the requirements for safety, reliability, and durability.

From the values of M and CT of embodiments 1 to 3 and comparative examples 1 to 10, it can be seen that M and CT exhibit a positive correlation in magnitude. That is, as M increases, the central tensile stress of the glass increases. In order to avoid easy crack propagation caused by an excessively large CT when the glass is subjected to impact, it is necessary to satisfy the needle-drop performance by limiting the magnitude of M.

In comparative examples 1 and 2, only the thermal strengthening process is performed. Although the value of M is relatively small (the central tensile stress CT is small) and the needle-drop performance is relatively high, the three-point bending strength is insufficient due to the low surface compressive stress CS₀.

In comparative example 3, only a single relatively low-level ion-exchange process is adopted to strengthen the glass, and the surface compressive stress CS₀ is relatively low, resulting in a relatively low three-point bending strength.

In comparative example 4, two ion-exchange processes (the first at a relatively low level, the second at a relatively high level) are performed on the glass under the condition that the thermal strengthening process is not performed on the glass sheet. As a result, this comparative example lacks a relatively large depth of the compressive stress layer produced by the thermal strengthening process, and thus the needle can easily penetrate the compressive stress layer and cause crack propagation.

In comparative example 5, although a relatively high-level thermal strengthening process is performed on the glass sheet, only a single relatively low-level ion-exchange process is adopted in the chemical strengthening stage. Consequently, the surface compressive stress CS₀ is low, and the value of M is relatively large, which in turn causes both the three-point bending strength and the needle-drop performance to fail to meet the requirements.

In comparative example 6, a relatively high-level thermal strengthening process is performed on the glass sheet. The compressive stress CS₂ produced by the thermal strengthening process is relatively high, which further leads to a relatively large value of M, specifically manifested as a relatively large central tensile stress CT, thereby failing to meet the needle-drop performance test requirements.

In comparative example 7, a relatively low-level thermal strengthening process is performed on the glass sheet, and only a single high-level ion-exchange process is performed, causing the increase of DOL₁, which further leads to a relatively large value of M, specifically manifested as a relatively large central tensile stress CT, thereby failing to meet the needle-drop performance test requirements.

In comparative example 8, a relatively low-level thermal strengthening process is performed on the glass sheet, and only two high-level ion-exchange processes are performed, causing the increase of DOL₁, which further leads to a relatively large value of M, specifically manifested as a relatively large central tensile stress CT, thereby failing to meet the needle-drop performance test requirements.

In comparative example 9, a relatively low-level thermal strengthening process is performed on the glass sheet, and only a single low-level ion-exchange process is performed. The surface compressive stress CS₀ is relatively low, failing to meet the three-point bending strength requirement.

In comparative example 10, a relatively low-level thermal strengthening process is performed on the glass sheet, and only two low-level ion-exchange processes are performed. The surface compressive stress CS₀ is relatively low, failing to meet the three-point bending strength requirement.

The above detailed introduction has been made to the content provided by the embodiments of the disclosure. This text has expounded and illustrated the principle and embodiments of the disclosure. The above description is only used to help understand the method of the disclosure and its core idea. Meanwhile, for those of ordinary skill in the art, according to the idea of the disclosure, there will be changes in the specific embodiments and application scopes. In summary, the content of this specification should not be construed as limiting the disclosure.

## Claims

1. A glass, wherein the glass has a first region, a second region, and a third region, wherein the second region is located within the first region, and the third region is located within the second region; the first region, the second region, and the third region each extend from an outer surface of the glass toward a center of the glass, and the glass satisfies the following conditions: 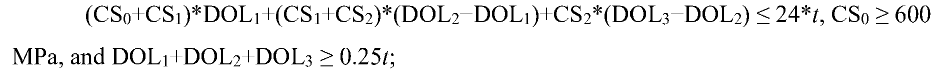 (CS0+CS1)*DOL1+(CS1+CS2)*(DOL2-DOL1)+CS2*(DOL3-DOL2) ≤ 24*t, CS0 ≥ 600 MPa, and DOL1+DOL2+DOL3 ≥ 0.25t; wherein CS₀ represents a surface compressive stress of the glass, CS₁ represents a knee stress of the glass between a first ion-exchange process and a second ion-exchange process, DOL₁ represents a knee depth of the glass between the first ion-exchange process and the second ion-exchange process, CS₂ represents a knee stress of the glass between a thermal strengthening process and the first ion-exchange process, DOL₂ represents a knee depth of the glass between the thermal strengthening process and the first ion-exchange process, DOL₃ represents a stress depth of the glass by the thermal strengthening process, and *t* represents a thickness of the glass.

2. The glass according to claim 1, wherein in the glass, CS₀, CS₁ and DOL₁ satisfy the following conditions: 600 MPa ≤ CS₀ ≤ 900 MPa, 200 MPa ≤ CS₁ ≤ 300 MPa, and 0.005 mm ≤ DOL₁ ≤ 0.015 mm.

3. The glass according to claim 1, wherein in the glass, CS₂ and DOL₂ satisfy the following conditions: 5 MPa ≤ CS₂ ≤ 15 MPa, and 0.035 mm ≤ DOL₂ ≤ 0.055 mm.

4. The glass according to claim 1, wherein in the glass, DOL₃ and *t* satisfy the following conditions: DOL₃ ≥ 0.25*t*, and 0.7 mm ≤ *t* ≤ 1.2 mm.

5. The glass according to claim 1, wherein the glass further satisfies the following condition: (CS₀-CS₁)/DOL₁ ≥ 2.5*(CS₁-CS₂)/(DOL₂-DOL₁).

6. The glass according to claim 1, wherein a central tensile stress CT of the glass satisfies the following condition: CT ≤ 30 MPa.

7. The glass according to claim 1, wherein the first region is formed by the thermal strengthening process, the second region is formed by the first ion-exchange process, and the third region is formed by the second ion-exchange process.

8. A manufacturing method of a glass, comprising:
providing a glass to be processed;
performing a thermal strengthening process on the glass to be processed to obtain a first strengthened glass;
performing a first ion-exchange process on the first strengthened glass to obtain a second strengthened glass; and
performing a second ion-exchange process on the second strengthened glass to obtain the glass of any one of claims 1 to 7.

9. The manufacturing method according to claim 8, wherein performing the thermal strengthening process on the glass to be processed comprises:
making a surface compressive stress σ₁ of the glass to be processed satisfy the following condition: 5 MPa ≤ σ₁ ≤ 15 MPa, and making DOL₃ and *t* of the glass to be processed satisfy: DOL₃ ≥ 0.25*t* and 0.7 mm ≤ *t* ≤ 1.2 mm, to obtain the first strengthened glass.

10. The manufacturing method according to claim 9, wherein during the thermal strengthening process, a heating treatment at a temperature T₁ is performed on the glass to be processed, and a cooling treatment at a wind pressure P is performed on the heated glass to be processed; and T₁ and P satisfy the following conditions: 550°C ≤ T₁ ≤ 750°C, and 50 mmWC ≤ P ≤ 220 mmWC.

11. The manufacturing method according to claim 8, wherein performing the first ion-exchange process on the first strengthened glass comprises:
making a surface compressive stress σ₂ of the first strengthened glass satisfy the following condition: 300 MPa ≤ σ₂ ≤ 500 MPa, and in the first strengthened glass, making CS₂ and DOL₂ satisfy the following conditions: 5 MPa ≤ CS₂ ≤ 15 MPa and 0.035 mm ≤ DOL₂ ≤ 0.055 mm, to obtain the second strengthened glass.

12. The manufacturing method according to claim 11, wherein during the first ion-exchange process, the first strengthened glass satisfies one of the following:
a mixed salt bath of potassium nitrate and sodium nitrate is adopted; wherein a mass ratio of potassium nitrate to sodium nitrate is (80-95):(5-20), a temperature of the first ion-exchange process is T₂, a duration of the first ion-exchange process is C₁, and T₂ and C₁ satisfy the following conditions: 380°C ≤ T₂ ≤ 450°C, and 60 min ≤ C₁ ≤ 150 min;
a potassium nitrate salt bath is adopted; wherein a proportion of potassium nitrate in salt is not less than 95%, the first ion-exchange process comprises an ion-exchange sub-process and an ion-migration sub-process, a temperature of the ion-exchange sub-process is T₃, a duration of the ion-exchange sub-process is C₂, and T₃ and C₂ satisfy the following conditions: 380°C ≤ T₃ ≤ 450°C, and 50 min ≤ C₂ ≤ 100 min; the ion-migration sub-process is carried out in air rather than by immersion in the potassium nitrate salt bath, a migration temperature is T₄, a migration duration is C₃, and T₄ and C₃ satisfy the following conditions: 450°C ≤ T₄ ≤ 500°C, and 10 min ≤ C₃ ≤ 60 min; or
an ion-exchange barrier layer is formed on the first strengthened glass, and the potassium nitrate salt bath is adopted; wherein the proportion of potassium nitrate in salt is not less than 95%, the temperature of the first ion-exchange process is T₅, the duration of the first ion-exchange process is C₄, and T₅ and C₄ satisfy the following conditions: 380°C ≤ T₅ ≤ 450°C, and 90 min ≤ C₄ ≤ 180 min.

13. The manufacturing method according to claim 8, wherein performing the second ion-exchange process on the second strengthened glass comprises:
making a surface compressive stress σ₃ of the second strengthened glass satisfy the following condition: 600 MPa ≤ σ₃ ≤ 900 MPa, and in the second strengthened glass, making CS₁ and DOL₁ satisfy the following conditions: 200 MPa ≤ CS₁ ≤ 300 MPa and 0.005 mm ≤ DOL₁ ≤ 0.015 mm, to obtain the glass.

14. The manufacturing method according to claim 13, wherein during the second ion-exchange process, a potassium nitrate salt bath is adopted; wherein a proportion of potassium nitrate in salt is not less than 95%, a temperature of the second ion-exchange process is T₆, a duration of the second ion-exchange process is C₅, and T₆ and C₅ satisfy the following conditions: 400°C ≤ T₆ ≤ 450°C, and 120 s ≤ C₅ ≤ 600 s.

15. A glass assembly, comprising an interlayer, a first glass, and a second glass, wherein the first glass is the glass according to any one of claims 1 to 7, and the first glass and the second glass are respectively disposed on opposite sides of the interlayer.

16. The glass assembly according to claim 15, wherein when a falling needle having a diameter of 4.6 mm, a length of 25 mm, a total mass of 3.2 g, and a diamond tip angle of 120° is dropped onto a surface of the first glass facing away from the interlayer, a drop height H₁ at which the falling needle is dropped onto the surface of the first glass facing away from the interlayer satisfies the following condition: H₁ ≥ 200 mm.

17. The glass assembly according to claim 15, wherein when a falling needle having a diameter of 4.6 mm, a length of 25 mm, a total mass of 3.2 g, and a diamond tip angle of 120° is dropped onto a surface of the second glass facing away from the interlayer, a drop height H₂ at which the falling needle is dropped onto the surface of the second glass facing away from the interlayer satisfies the following condition: H₂ ≥ 300 mm.

18. A vehicle, comprising a vehicle body and the glass assembly according to any one of claims 15 to 17, wherein the glass assembly is mounted on the vehicle body, and in the glass assembly, the first glass is closer to an interior space of the vehicle body than the second glass.
